# EUROPEAN PATENT APPLICATION

(11) **EP 1 246 107 A1**
(43) Date of publication of application: **02.10.2002**
(21) Application number: 02251328.7
(22) Date of filing: 26.02.2002
(51) Int. Cl.: G06F 17/60

(54) **Advertisement information providing system and method, distribution module and method, distribution program and information recording medium**

(30) Priority: 01.03.2001 JP 2001057119
(71) Applicant: Pioneer Corporation, Tokyo-to (JP)
(72) Inventor: Kuroda, Kazuo, Tokorozawa-shi, Saitama-ken (JP)
(74) Representative: Townsend, Victoria Jayne

(57) **Abstract**

This invention provides an advertisement information providing system having a novel configuration never seen before and capable of saving advertisement cost for an advertiser. More specifically, this advertisement information providing system comprises an advertisement information server (DB) which accepts registration of advertisement information to be output as advertisement from outside, generates advertisement related information necessary for distributing the advertisement information based on the registered advertisement information, generates distribution information composed of only the generated advertisement related information and the advertisement information corresponding to the advertisement related information and outputs the generated distribution information to network (IN), the network (IN) for distributing the output distribution information to a plurality of consumer terminals (J) and consumer terminals (J) for obtaining the output distribution information from the network (IN) and outputting advertisement information contained in the obtained distribution information.

## Description

### BACKGROUND OF THE INVENTION

### 1. Field of the Invention

The present invention relates to technical field about advertisement information providing system, distribution module, advertisement information providing method, and information recording medium and more particularly to advertisement information providing system for providing advertisement information through transmitting medium such as internet, distribution module, advertisement information providing method and information recording medium for recording programs for the same advertisement information provision processing.

### 2. Description of the Related Art

In recent years, distribution of information through so-called internet has been prevailing. In distribution of information through the internet, advertisement information is distributed arbitrarily and additionally when distributing for example, a specific content (including image information such as movie, music information and commodity information).

Upon distributing the advertisement information, generally, an advertiser of the advertisement information pays a distribution fee for the advertisement information continuously to a distributor of that content.

However, in the conventional distribution of the advertisement information, the advertisement information has been distributed arbitrarily and additionally, but it has been never distributed as a main content of information.

Further, the advertiser intending to distribute advertisement information must pay for a necessary cost continuously and bear a large amount of advertising expenditure.

### SUMMARY OF THE INVENTION

Accordingly, the present invention has been achieved in views of the above-described problems and therefore, an object of the present invention is to provide an advertisement information providing system which has a novel configuration never seen before and allows the advertiser to save his advertising expenditure, distribution module, advertisement information providing method and information recording medium for recording programs for the same advertisement information provision processing.

The above object of the present invention can be achieved by an advertisement information providing system provided with a distribution module, including: a registration accepting device such as a registration accepting portion etc., which accepts registration of advertisement information to be output as advertisement from outside; a related information generating device such as a CPU etc., which generates advertisement related information necessary for distributing said advertisement information based on said registered advertisement information; a distribution information generating device such as a CPU etc., which generates any one of distribution information composed of only said generated advertisement related information and said advertisement information corresponding to the generated advertisement related information or distribution information consisting of only said advertisement related information, said advertisement information corresponding to the advertisement related information and subsidiary information subsidiary to the advertisement information; and an outputting device such as a CPU etc., which outputs said generated distribution information to a transmitting medium, and an output module including: said transmitting medium such as network etc., for distributing said output distribution information to a plurality of output modules; an obtaining device such as an interface portion etc., which obtains said output distribution information from said transmitting medium; and an information outputting device such as a display etc., which outputs said advertisement information included in said obtained distribution information.

Because any one of the distribution information containing only the advertisement information and the advertisement related information necessary for distributing the advertisement information or distribution information consisting of only the advertisement related information, the advertisement information and auxiliary information is distributed to a plurality of the output modules through the transmitting medium, it is possible to provide a novel advertisement information providing system capable of distributing at least only the advertisement information for use in advertisement.

In one aspect of the advertisement information providing system of the present invention, said output module further includes a request generating device such as a CPU etc., which generates distribution request information indicating said advertisement information desired to be output and outputs to said distribution module through said transmitting medium and said outputting device in said distribution module outputs said distribution information containing said advertisement information indicated by the distribution request information to said output module which outputs the distribution request information through said transmitting medium based on said output distribution request information.

Because only advertisement information corresponding to distribution request information is distributed, only advertisement which a person who receives output of the advertisement wants can be output to prevent unnecessary advertisement from being output.

In another aspect of the advertisement information providing system of the present invention, said output module further includes: a voting accepting device such as a CPU etc., which accepts a voting for ranking said output advertisement information; and a voting outputting device such as an interface portion etc., which outputs voting information indicating the content of said accepted voting to said distribution module through said transmitting medium, and said distribution module further includes: a ranking device such as a ranking creating portion etc., which ranks each said advertisement information based on said output voting information and generates ranking information; and a ranking distribution device such as an interface portion etc., which distributes said generated ranking information to each said output module.

Because output pieces of the advertisement information are ranked and the ranking information which is its result is distributed, the ranking of each advertisement information can be recognized and a trend of generally liked advertisement information can be grasped.

In further aspect of the advertisement information providing system of the present invention, said ranking device ranks each said advertisement information based on at least any one of said output voting information and the number of distributions to said output module and generating said ranking information.

Because the ranking of each advertisement information is carried out based on at least any one of the voting information and the number of distributions to an output module, the ranking of the advertisement information can be achieved more fairly.

In further aspect of the advertisement information providing system of the present invention, said distribution module includes: a new matter accumulating device such as a ranking memory etc., which accumulates all pieces of said advertisement information registered newly; and a upper rank accumulating device which accumulates only pieces of said advertisement information having higher rank than a predetermined rank, and said distribution information generating device in said distribution module generates said distribution information using said advertisement information accumulated in said upper rank accumulating device and said new matter accumulating device.

Because the new matter accumulating device which accumulates newly registered advertisement information pieces and the upper rank accumulating device which accumulates only advertisement information pieces located at high ranks are provided, the newly registered advertisement information and the generally liked advertisement information can be output in parallel.

In further aspect of the advertisement information providing system of the present invention, said output device in said distribution module outputs said advertisement information registered newly only in a period preliminarily set up since the new matter registration irrespective of the rank order of said advertisement information indicated by said ranking information so that it can be distributed to said output module.

Because the advertisement information registered newly can be distributed to the output module only in a period preliminarily set up since the new matter registration irrespective of the rank order of the advertisement information, a period in which the newly registered advertisement information is generally recognized can be secured, thereby enabling the ranking to be carried out more fairly.

In further aspect of the advertisement information providing system of the present invention, said registration accepting device in said distribution module includes a registration fee accepting device such as a registration accepting portion etc., which accepts only payment of registration fee which should be paid by an advertiser who distributes said advertisement information to each said output module based on said ranking.

Because only payment of the registration fee which should be paid by an advertiser who desires to distribute the advertisement information based on the ranking is accepted, the advertiser does not have to pay a conventional advertisement cost continuously and thereby he can save his advertisement cost.

In further aspect of the advertisement information providing system of the present invention, said registration accepting device in said distribution module accepts payment of re-registration fee which should be paid when said advertisement information removed from accumulation in said upper rank accumulating device is re-registered as well as payment of registration fee which should be paid by an advertiser who distributes said advertisement information to each said output module based on said ranking.

Because the re-registration fee which occurs after the removal from the ranking as well as a registration fee which is necessary when new advertisement information is registered is accepted, the advertisement information which is not removed from the ranking continues to be distributed without payment of the fee. Accordingly, an advertiser who creates advertisement information liked generally can continue to distribute that advertisement information at a low cost.

In further aspect of the advertisement information providing system of the present invention, said advertisement information is composed of plural languages.

Because the advertisement information is composed of plural languages, the content of the advertisement information can be distributed widely.

In further aspect of the advertisement information providing system of the present invention, said distribution module includes: a catalog accumulating device such as a CPU etc., which accumulates catalog information indicating an object of said advertisement information; and a catalog information output device such as an interface portion etc., which outputs said catalog information indicated by the catalog review request information based on catalog review request information transmitted from said output module to said output module which transmits said catalog review request information through said transmitting medium, and said output module includes: a catalog review request information generating device such as a CPU etc., which generates said catalog review request information indicating said catalog information desired to be reviewed; a catalog review request information output device such as an interface portion etc., which outputs said generated catalog review request information to said distribution module through said transmitting medium; and an output module catalog information outputting device such as a display etc., which outputs catalog information output by said catalog information output device.

Because the catalog information corresponding to the advertisement information is accumulated and distributed corresponding to a request of a person who receives its output, convenience of the advertisement information providing system can be improved.

In further aspect of the advertisement information providing system of the present invention, the distribution module includes at least: said registration accepting device; said related information generating device; said distribution information generating device; and said output device.

Accordingly, distribution information containing only advertisement information and advertisement related information necessary for distributing the advertisement information is distributed to a plurality of the output modules through transmitting medium. Thus, it is possible to provide an advertisement information providing system in which only advertisement information for use in advertisement is distributed.

The above object of the present invention can be achieved by an information recording medium in which a distribution program which makes a distribution computer included in said distribution module in the advertisement information providing system containing the distribution module for outputting advertisement information output as advertisement to the transmitting medium such as a network etc., and the output module for acquiring the output advertisement information from said transmitting medium and outputting, function as: a registration accepting device which accepts registration of advertisement information from outside; a related information generating device which generates advertisement related information necessary for distributing said advertisement information based on said registered advertisement information; a distribution information generating device which generates any one of distribution information composed of only said generated advertisement related information and said advertisement information corresponding to the advertisement related information and distribution information consisting of only said advertisement related information, said advertisement information corresponding to the advertisement related information and subsidiary information subsidiary to the advertisement information; and an outputting device which outputs said generated distribution information to a transmitting medium, is recorded readably by said distribution computer.

Because the distributing computer functions to distribute any one of the distribution information containing only advertisement information and advertisement related information necessary for distributing the advertisement information or the distribution information consisting of only the advertisement related information, the advertisement information and auxiliary information to a plurality of the output modules through the transmitting medium, a novel advertisement information providing system capable of distributing at least only the advertisement information for use in advertisement can be provided.

In one aspect of the information recording medium of the present invention, said distribution program which makes said distribution computer functioning as said output device, function to output said distribution information containing said advertisement information indicated by the distribution request information based on the distribution request information indicating said advertisement information output from said output module and desired to be output from the output module to said output module outputting the distribution request information through said transmitting medium, is recorded readably by said distribution computer.

Because the distributing computer functions to distribute only the advertisement information corresponding to the distribution request information, only advertisement desired by a person who receives the advertisement can be output to prevent unnecessary advertisement from being output.

In another aspect of the information recording medium of the present invention, said distribution program which makes said distribution computer function as: a ranking device which ranks each piece of said advertisement information based on voting information output from said output module and indicating the content of voting for ranking each said advertisement information, and generates the ranking information; and a ranking distribution device which distributes said generated ranking information to each said output module.

Because the distributing computer functions to rank pieces of advertisement information to be output and distribute the ranking information which is its result, the ranking of each advertisement information can be recognized and a trend of generally liked advertisement information can be grasped.

In further aspect of the information recording medium of the present invention, said distribution program which makes said distribution computer functioning as said ranking device, function to rank each piece of said advertisement information based on at least any one of said output voting information and the number of distributions to said output module and generate said ranking information, is recorded readably by said distribution computer.

Because the distributing computer functions to carry out the ranking of each advertisement information based on at least any one of voting information and the number of distributions to an output module, the ranking of the advertisement information can be achieved more fairly.

In further aspect of the information recording medium of the present invention, said distribution module includes: a new matter accumulating device such as an advertisement information memory etc., which accumulates all pieces of said advertisement information registered newly; and a upper rank accumulating device such as a ranking memory etc., which accumulates only pieces of said advertisement information having higher rank than a predetermined rank, based on said ranking information, and said distribution program which makes said distribution computer functioning as said distribution information generating device to generate said distribution information using said advertisement information accumulated both in said upper rank accumulating device and said new matter accumulating device.

Because the new matter accumulating device which accumulates newly registered advertisement information pieces and the upper rank accumulating device which accumulates only advertisement information pieces located at high ranks are provided and the distributing computer functions to generate distribution information using the advertisement information pieces accumulated in both, the newly registered advertisement information and the generally liked advertisement information can be output in parallel.

In further aspect of the information recording medium of the present invention, said distribution program which makes said distribution computer functioning as said output device, function to output said advertisement information registered newly only in a period preliminarily set up since the new matter registration irrespective of the rank order of said advertisement information indicated by said ranking information so that it can be distributed to said output module, is recorded readably by said distribution computer.

Because the distributing computer functions to distribute the advertisement information registered newly to the output module only in a period preliminarily set up since its new matter registration irrespective of the rank order of the advertisement information, a period in which the newly registered advertisement information is generally recognized can be secured, thereby enabling the ranking to be carried out more fairly.

In further aspect of the information recording medium of the present invention, said distribution program which makes said distribution computer functioning as said registration accepting device function as a registration fee accepting device which accepts only payment of registration fee which should be paid by an advertiser who distributes said advertisement information to each said output module based on said ranking, is recorded readably by said distribution computer.

Because the distributing computer functions to accept only payment of the registration fee which should be paid by an advertiser who distributes the advertisement information based on the ranking, the advertiser does not have to pay a conventional advertisement cost continuously and thereby he can save his advertisement cost.

In further aspect of the information recording medium of the present invention, said distribution program which makes said distribution computer functioning as said registration accepting device function to accept payment of re-registration fee which should be paid when said advertisement information removed from accumulation in said upper rank accumulating device is re-registered as well as payment of registration fee which should be paid by an advertiser who distributes said advertisement information to each said output module based on said ranking, is recorded readably by said distribution computer.

Because the distributing computer functions to accept the re-registration fee which occurs after the removal from the ranking as well as a registration fee which is necessary when new advertisement information is registered, the advertisement information which is not removed from the ranking continues to be distributed without payment of the fee. Accordingly, an advertiser who creates advertisement information liked generally can continue to distribute that advertisement information at a low cost.

In further aspect of the information recording medium of the present invention, said distribution program in which said advertisement information is composed of plural languages, is recorded readably by said distribution computer.

Because the advertisement information is composed of plural languages, the content of the advertisement information can be distributed widely.

In further aspect of the information recording medium of the present invention, said distribution module further includes a catalog accumulating device such as a CPU etc., which accumulates catalog information indicating an object of said advertisement information and said distribution program which makes said distribution computer function as a catalog information output device which outputs said catalog information indicated by said catalog review request information based on the catalog review request information indicating said catalog information transmitted from said output module and desired to be reviewed to said output module which transmits said catalog review request information through said transmitting medium, is recorded readably by said distribution computer.

Because the catalog information corresponding to the advertisement information is accumulated and the distributing computer functions to distribute this catalog information corresponding to a request of a person who receives its output, convenience of the advertisement information providing system can be improved.

The above object of the present invention can be achieved by a distribution program which makes a distribution computer included in said distribution module in the advertisement information providing system containing the distribution module for outputting advertisement information output as advertisement to the transmitting medium and the output module for acquiring the output advertisement information from said transmitting medium and outputting, function as: a registration accepting device which accepts registration of advertisement information from outside; a related information generating device which generates advertisement related information necessary for distributing said advertisement information based on said registered advertisement information; a distribution information generating device which generates any one of distribution information composed of only said generated advertisement related information and said advertisement information corresponding to the advertisement related information and distribution information consisting of only said advertisement related information, said advertisement information corresponding to the advertisement related information and subsidiary information subsidiary to the advertisement information; and an outputting device which outputs said generated distribution information to a transmitting medium.

Because the distributing computer functions to distribute any one of the distribution information containing only the advertisement information and advertisement related information necessary for distributing the advertisement information or the distribution information consisting of only the advertisement related information, the advertisement information and auxiliary information to a plurality of the output modules through the transmitting medium, a novel advertisement information providing system capable of distributing at least only the advertisement information for use in advertisement can be provided.

The above object of the present invention can be achieved by an advertisement information providing method to be executed by said distribution module in the advertisement information providing system containing the distribution module for outputting advertisement information output as advertisement to the transmitting medium such as a network etc., and the output module for acquiring the output advertisement information from said transmitting medium and outputting, said advertisement information providing method provided with: a registration accepting process which accepts registration of advertisement information from outside; a related information generating process which generates advertisement related information necessary for distributing said advertisement information based on said registered advertisement information; a distribution information generating process which generates any one of distribution information composed of only said generated advertisement related information and said advertisement information corresponding to the advertisement related information and distribution information consisting of only said advertisement related information, said advertisement information corresponding to the advertisement related information and subsidiary information subsidiary to the advertisement information; and an outputting process which outputs said generated distribution information to a transmitting medium.

Because any one of the distribution information containing only the advertisement information and advertisement related information necessary for distributing the advertisement information or the distribution information consisting of only the advertisement related information, the advertisement information and auxiliary information is distributed to a plurality of the output modules through the transmitting medium, a novel advertisement information providing system capable of distributing at least only the advertisement information for use in advertisement can be provided.

In one aspect of the advertisement information providing method of the present invention, said output process outputs said distribution information containing said advertisement information indicated by the distribution request information to said output module outputting the distribution request information through said transmitting medium based on the distribution request information indicating said advertisement information output from said output module and desired to be output from the output module.

Because only the advertisement information corresponding to the distribution request information is distributed, only advertisement desired by a person who receives the advertisement can be output to prevent unnecessary advertisement from being output.

In another aspect of the advertisement information providing method of the present invention, there is further provided with: a ranking process which ranks each piece of said advertisement information based on voting information output from said output module and indicating the content of voting for ranking each said advertisement information; and a ranking distribution process which distributes said generated ranking information to each said output module.

Because pieces of advertisement information to be output are ranked and the ranking information which is its result is distributed, the ranking of each advertisement information can be recognized and a trend of generally liked advertisement information can be grasped.

In further aspect of the advertisement information providing method of the present invention, said ranking process ranks each piece of said advertisement information based on at least any one of said output voting information and the number of distributions to said output module and generates said ranking information.

Because the ranking of each advertisement information is carried out based on at least any one of the voting information and the number of distributions to an output module, the ranking of the advertisement information can be achieved more fairly.

In further aspect of the advertisement information providing method of the present invention, said distribution module includes: a new matter accumulating device such as an advertisement information memory etc., which accumulates all pieces of said advertisement information registered newly; and a upper rank accumulating device such as a ranking memory etc., which accumulates only pieces of said advertisement information having higher rank than a predetermined rank, and said distribution information generating process generates said distribution information using said advertisement information accumulated both in said upper rank accumulating device and said new matter accumulating device.

Because the new matter accumulating device which accumulates newly registered advertisement information pieces and the upper rank accumulating device which accumulates only advertisement information pieces located at high ranks are provided and distribution information is generated using the advertisement information pieces accumulated in both, the newly registered advertisement information and the generally liked advertisement information can be output in parallel.

In further aspect of the advertisement information providing method of the present invention, said output process output said advertisement information registered newly only in a period preliminarily set up since the new matter registration irrespective of the rank order of said advertisement information indicated by said ranking information so that it can be distributed to said output module.

Because the advertisement information registered newly can be distributed to the output module only in a period preliminarily set up since the new matter registration irrespective of the rank order of the advertisement information, a period in which the newly registered advertisement information is generally recognized can be secured, thereby enabling the ranking to be carried out more fairly.

In further aspect of the advertisement information providing method of the present invention, said registration accepting process accepts only payment of registration fee which should be paid by an advertiser who distributes said advertisement information to each said output module based on said ranking.

Because only payment of the registration fee which should be paid by an advertiser who distributes the advertisement information is accepted based on the ranking, the advertiser does not have to pay a conventional advertisement cost continuously and thereby he can save his advertisement cost.

In further aspect of the advertisement information providing method of the present invention, said registration accepting process accept payment of re-registration fee which should be paid when said advertisement information removed from accumulation in said upper rank accumulating device is re-registered as well as payment of registration fee which should be paid by an advertiser who distributes said advertisement information to each said output module based on said ranking.

Because the re-registration fee which occurs after the removal from the ranking as well as a registration fee which is necessary when new advertisement information is registered are accepted, the advertisement information which is not removed from the ranking continues to be distributed without payment of the fee. Accordingly, an advertiser who creates advertisement information liked generally can continue to distribute that advertisement information at a low cost.

In further aspect of the advertisement information providing method of the present invention, said advertisement information is composed of plural languages.

Because the advertisement information is composed of plural languages, the content of the advertisement information can be distributed widely.

In further aspect of the advertisement information providing method of the present invention, said distribution module further includes a catalog accumulating device such as a CPU etc., which accumulates catalog information indicating an object of said advertisement information, said advertisement information providing method further provided with a catalog information output process which outputs said catalog information indicated by said catalog review request information based on the catalog review request information indicating said catalog information transmitted from said output module and desired to be reviewed to said output module which transmits said catalog review request information through said transmitting medium.

Because the catalog information corresponding to the advertisement information is accumulated and the distributing computer functions to distribute this catalog information corresponding to a request of a person who receives its output, convenience of the advertisement information providing system can be improved.

The above object of the present invention can be achieved by a distribution module for distributing advertisement information indicated at a consumer terminal as advertisement to said consumer terminal through a transmitting medium such as a network etc., provided with: a registration accepting device which accepts registration of advertisement information from outside; a distribution information generating device which generates distribution information to be distributed to said consumer terminal based on said registered advertisement information; a display device which displays a plurality of said generated distribution information pieces such that they are capable of being reviewed from said consumer terminal through said transmitting medium and distributed through said transmitting medium; and a distributing device for based on a distribution request from said consumer terminal, distributing said distribution information corresponding to said distribution request to the consumer terminal which outputs the distribution request through said transmitting medium.

Because plural pieces of distribution information are displayed such that they can be distributed, a novel advertisement information providing system capable of distributing at least only the advertisement information for use in advertisement can be provided.

In one aspect of the distribution module of the present invention, said display device displays at least a representative image of said distribution information to be displayed.

Accordingly, it is possible to grasp the content of distribution information displayed at the consumer terminal easily when reviewing the display device and to determine distribution information desired to be distributed.

The above object of the present invention can be achieved by an information recording medium in which a distribution program which makes a distribution computer included in a distribution module for distributing advertisement information indicated at a consumer terminal as advertisement to said consumer terminal through a transmitting medium, function as: a registration accepting device which accepts registration of advertisement information from outside; a distribution information generating device which generates distribution information to be distributed to said consumer terminal based on said registered advertisement information; a display device which displays a plurality of said generated distribution information pieces such that they are capable of being reviewed from said consumer terminal through said transmitting medium and distributed through said transmitting medium; and a distributing device for based on a distribution request from said consumer terminal, distributing said distribution information corresponding to said distribution request to the consumer terminal which outputs the distribution request through said transmitting medium, is recorded readably by said distribution computer.

Because the distributing computer functions to display plural pieces of distribution information such that they can be distributed, a novel advertisement information providing system capable of distributing at least only the advertisement information for use in advertisement can be provided.

The above object of the present invention can be achieved by a distribution program which makes a distribution computer included in a distribution module for distributing advertisement information indicated at a consumer terminal as advertisement to said consumer terminal through a transmitting medium function as: a registration accepting device which accepts registration of advertisement information from outside; a distribution information generating device which generates distribution information to be distributed to said consumer terminal based on said registered advertisement information; a display device which displays a plurality of said generated distribution information pieces such that they are capable of being reviewed from said consumer terminal through said transmitting medium and distributed through said transmitting medium; and a distributing device for based on a distribution request from said consumer terminal, distributing said distribution information corresponding to said distribution request to the consumer terminal which outputs the distribution request through said transmitting medium.

Because the distributing computer functions to display plural pieces of distribution information such that they can be distributed, a novel advertisement information providing system capable of distributing at least only the advertisement information for use in advertisement can be provided.

### BRIEF DESCRIPTION OF THE DRAWINGS

FIG. 1 is a block diagram showing an entire advertisement information providing system of an embodiment of the present invention;
FIG. 2 is a block diagram showing a detailed structure of an advertiser server;
FIG. 3 is a block diagram showing a detailed structure of the advertisement information server, while FIG. 3A is a block diagram showing a detailed structure of the entire advertisement information server and FIG. 3B is a block diagram showing a detailed structure of an information displaying portion;
FIG. 4 is a block diagram showing the detailed structure of a consumer terminal;
FIG. 5 is a flow chart showing advertisement information registration processing;
FIG. 6 is a flow chart showing a novel registration processing;
FIG. 7 is a flow chart showing a ranking creation processing;
FIG. 8 is a flow chart showing a ranking removal processing;
FIG. 9 is a flow chart showing advertisement information display processing;
FIG. 10 is a diagram showing an example of initial connection screen; and
FIG. 11 is a diagram showing an example of selection screen, while FIG.
11A is an example of a selection screen for selecting advertisement information in the ranking memory and FIG. 11B is an example of a selection screen for selecting advertisement information in advertisement information memory.

### DESCRIPTION OF THE PREFERRED EMBODIMENTS

Next, the preferred embodiments of the present invention will be described in detail with reference to the accompanying drawings.

The advertisement information providing system of the present invention, which will be described below, comprises an advertiser server installed in an advertiser for creating advertisement information including an advertisement intended to be provided to consumers, advertisement information server for accumulating and distributing the created advertisement information and a plurality of consumer terminals which select advertisement desired to be displayed from the accumulated pieces of advertisement information, obtains any selected advertisement information and displays it.

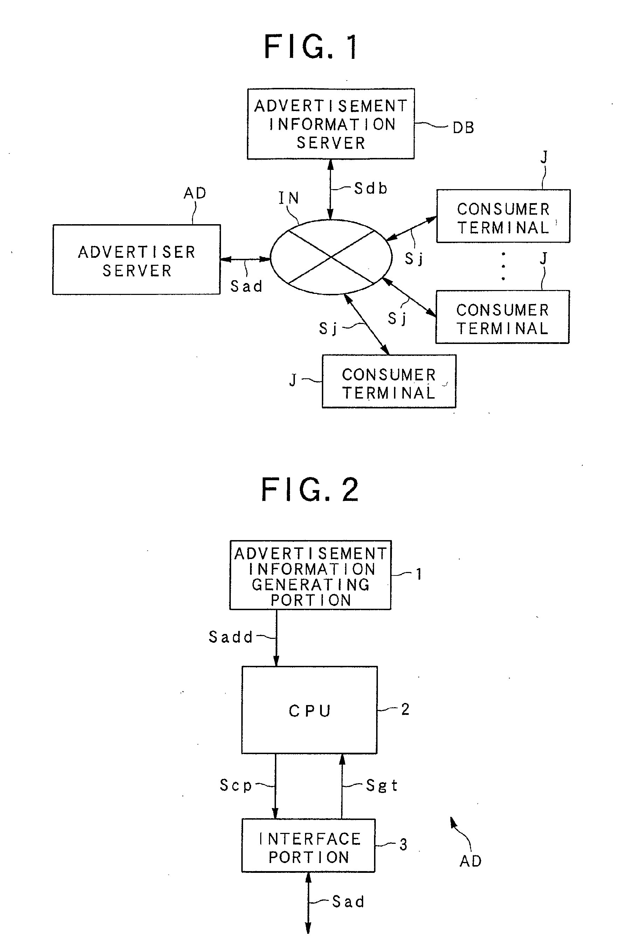

First, the entire structure of the advertisement information providing system of this embodiment will be described with reference to FIG. 1. FIG. 1 is a block diagram showing the entire configuration of the advertisement information providing system.

As shown in FIG. 1, the advertisement information providing system S of this embodiment includes the aforementioned advertiser server AD which creates advertisement information including an advertisement desired to be displayed to general consumers and registers this information in the advertisement information server DB, the advertisement information server DB which accumulates the created/registered advertisement information and distributes to the consumer corresponding to his or her desire and one or a plurality of consumer terminals J which selects an advertisement desired to be displayed from the advertisement information accumulated in the advertisement information server database, obtains the corresponding advertisement information from the advertisement information server database and displays it. The advertiser server AD, the advertisement information server DB and consumer terminals J are connected through a network IN which is a transmission medium constituted of for example, internet, other wired network or radio network in order to exchange information among those.

The advertiser server AD is capable of exchanging information with the advertisement information server DB or the like by advertisement signal Sad through network IN. The advertisement information server DB is capable of exchanging information with the advertiser server AD or the like by server signal Sdb through the network IN. Each of the consumer terminals J is capable of exchanging information with the advertiser server AD by terminal signal Sj through the network IN.

Although FIG. 1 shows a case where there is only one advertiser server AD for supplying advertisement information, the present invention is not restricted to this example, but advertisement information supplied from plural advertiser servers ADs may be controlled by a single advertisement information server DB.

Next, the detailed structure of each component will be described with reference to FIGs. 2 to 4.

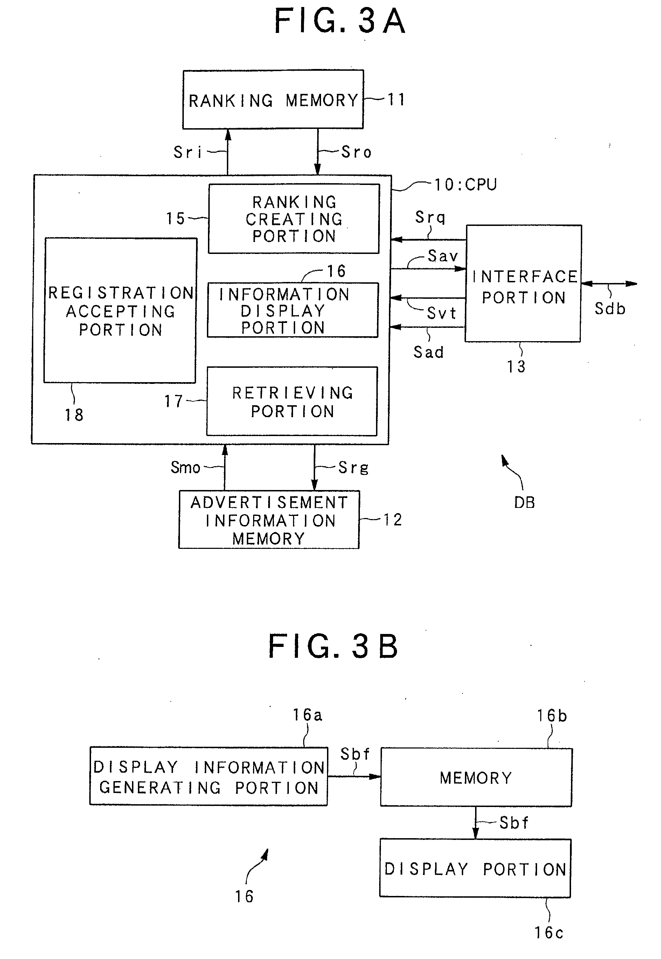

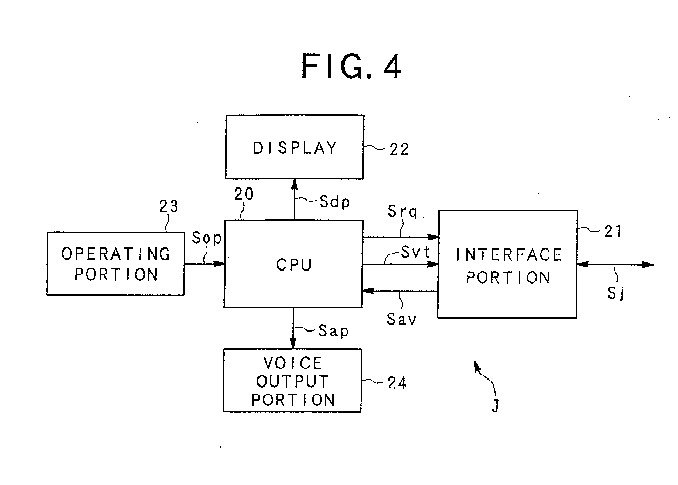

FIG. 2 is a block diagram showing the detailed structure of the advertiser server AD, FIG. 3 is a block diagram showing the detailed structure of the advertisement information server DB, and FIG. 4 is a block diagram showing the detailed structure of the consumer terminal J.

First, the detailed structure and operation of the advertiser server AD will be described with reference to FIG. 2.

As shown in FIG. 2, the advertiser server AD of this embodiment is comprises an advertisement information generating portion 1, a CPU 2 and an interface portion 3.

Next, the operation of the advertiser server AD will be described. First, the advertisement information generating portion 1 generates advertisement information including an advertisement desired to be displayed to a general consumer each having a consumer terminal J and outputs this information to the CPU 2 as advertisement signal Sadd.

Next, the CPU 2 converts that advertisement signal Sadd to a condition signal which can be sent through the network IN and outputs it to the interface portion 3 as a conversion signal Scp.

Consequently, the interface portion 3 carries out preliminarily set-up output interface processing such as modulation processing and outputs this processed signal to the advertisement information server DB as the aforementioned advertisement signal Sad through the network IN.

After that, the advertisement signal Sad is received by the advertisement information server DB and subjected to the registration processing, which will be described later, so that the content of the advertisement contained in the advertisement signal Sad can be displayed to each consumer.

On the other hand, if the registered advertisement information is removed from the advertisement information ranking (hereinafter called just ranking) in the advertisement information server DB. And if a ranking removal notice saying that registration in the advertisement information server DB is erased is transmitted by the advertisement signal Sad through the network IN from the advertisement information server DB, the interface portion 3 carries out preliminarily set-up input interface processing upon the advertisement signal Sad containing that ranking removal notice and outputs it to the CPU 2 as a notice signal Sgt.

Consequently, the CPU 2 indicates the content of the notice signal Sgt to an advertiser and carries out re-registration processing which will be described later, based on operation executed by the advertiser.

Next, the detailed structure and operation of the advertisement information server DB will be described with reference to FIG. 3.

As shown in FIG. 3A, the advertisement information server DB of this embodiment comprises a CPU 10 which works as a related information generating device, as a distribution information generating device and as a catalog accumulating device, a ranking memory 11 which works as an upper level accumulating device, an advertisement information memory 12 which works as a novel accumulating device and an interface portion 13 which works as an output device, as a ranking distributing device and as a catalog information outputting device.

The CPU 10 comprises a ranking creating portion 15 which works as a ranking device, an information displaying portion 16, a retrieving portion 17 and a registration accepting portion 18 which works as a registration accepting device and as a registration fee receiving device. Meanwhile, the ranking creating portion 15, the information displaying portion 16, the retrieving portion 17 and the registration accepting portion 18 are connected to exchange information within the CPU 10.

On the other hand, as shown in FIG. 3B, the information displaying portion 16 comprises a display information creating portion 16a, a memory 16b and a display portion 16c.

Next, the operation will be described.

Upon registration of advertisement information, if an advertisement signal Sad containing advertisement information to be displayed to consumers is transmitted from the advertiser server AD through the network, the interface portion 13 receives this as a server signal Sdb from the network IN. Then, it carries out preliminarily set-up input interface processing and outputs to the registration accepting portion 18 in the CPU 10 as an advertisement signal Sad. Meanwhile, the advertisement information included in the advertisement signal Sad contains advertisement information which should be newly created and registered and advertisement information which is to be re-registered after it is removed from the ranking, which will be described later.

Consequently, the registration accepting portion 18 executes novel registration processing or re-registration processing which will be described later, upon the advertisement information and outputs to the advertisement information memory 12 as a registration advertisement signal Srg. As a result, the advertisement information is accumulated in the advertisement information memory 12 such that it can be identified.

Each advertisement information accumulated in the advertisement information memory 12 is output from the advertisement information memory 12 as the advertisement signal Smo as requested by the retrieving portion 17.

On the other hand, when a consumer requests to display advertisement information, if a terminal signal Sj indicating advertisement information requested to be displayed is transmitted from each consumer terminal J through the network IN, the interface portion 13 receives this as server signal Sdb from the network IN and carried out the preliminarily set-up input interface processing upon this signal and then outputs to the retrieving portion 17 within the CPU 10 as a display request signal Srq.

The retrieving portion 17 retrieves advertisement information indicated by the display request signal Srq within the advertisement information memory 12 or the ranking memory 11. Then, it reads out the retrieved advertisement information and outputs it to the interface portion 13 as the advertisement signal Sav.

The interface portion 13 executes the preliminarily set-up output interface processing upon that output advertisement signal Sav and outputs it to the consumer terminal J which outputs the aforementioned display request signal Srq as the server signal Sdb through the network IN.

This server signal Sdb includes not only the advertisement information but also its related information necessary for distributing that advertisement information such as consumer terminal identification information indicating a distribution destination of the advertisement information.

After that, the advertisement information contained in the server signal Sdb is displayed at a consumer terminal J which receives that signal Sdb.

The retrieving portion 17 not only retrieves the advertisement information but also accumulates a number of outputs to each consumer terminal by each advertisement information to store that count in a memory (not shown) in the CPU 10.

Finally, if a consumer votes on advertisement information displayed to him (voting which is achieved by that consumer's selecting a his desired advertisement information), when a terminal signal Sj indicating the content of voting corresponding to the displayed advertisement information is transmitted from each consumer terminal J through the network IN as described later, the interface portion 13 receives this as the server signal Sdb from the network IN, carries out the preliminarily set-up input interface processing and outputs it to the ranking creating portion 15 in the CPU 10 as a voting signal Svt.

The ranking creating portion 15 executes the ranking creating procedure for each piece of the advertisement information, which will be described later, accumulated currently in the advertisement information memory 12, based on the content of voting contained in the voting signal Svt and output number information stored in the memory (not shown). It reads out advertisement information about orders (for example, up to thirtieth order from top) preliminarily set up of the created ranking from the advertisement information memory 12 as an advertisement signal Smo and then outputs it to the ranking memory 11 as a ranking signal Sri.

The ranking memory 11 accumulates the advertisement information contained in the ranking signal Sri such that its ranking can be identified.

Each advertisement information accumulated in the ranking memory 11, which will be described later, is output from the ranking memory 11 as an advertisement signal Sro as requested by the retrieving portion 17.

On the other hand, the information displaying portion 16 extracts a preliminarily set-up number of pieces of advertisement information accumulated in the advertisement information memory 12 and advertisement information accumulated in the ranking memory 11 (that is, advertisement information of upper ranking) from the advertisement information memory 12 and ranking memory 11, and displays them with representative screens G1, G2, ··· in a condition exemplified on a selection screen PK or NK, which will be described later.

More specifically, as shown in FIG. 3B, the display information creating portion 16a creates the aforementioned selection screen PK or NK using the representative screens G1, G2, ··· and stores it temporarily as screen information Sbf in the memory 16b. Then, the screen information Sbf containing the selection screen PK or NK, which is displayed corresponding to the display request signal Srq, is output to the display portion 16C at a timing preliminarily set up according to the display request signal Srq transmitted from the consumer terminal J described later so that that advertisement information is displayed at each consumer terminal J such that it can be seen through the network IN.

Next, the detailed structure and operation of each consumer terminal J having the same structure will be described with reference to FIG. 4.

As shown in FIG. 4, the consumer terminal J of this embodiment comprises the CPU 20, which works as a request creating device and as a catalog review request information creating device, the interface portion 21, which works as an obtaining device, as a voting output device and as a catalog review request information output device, a display 22, which works as an information output device and as an output module catalog information output device, an operating portion 23 which works as a voting receiving device and a voice output portion 24.

Next, the operation will be described.

If an operation for reviewing advertisement information displayed by the information display portion 16 in the advertisement information server DB through the network IN is carried out in the operating portion 23, an operation signal Sop corresponding to that operation is created and output to the CPU 20.

Consequently, the CPU 20 creates the display request signal Srq including identification information indicating advertisement information desired to be reviewed corresponding to the operation signal Sop and outputs it to the interface portion 21.

Then, the interface portion 21 carries out the preliminarily set-up output interface processing upon the display request signal Srq and outputs it to the advertisement information server DB as a terminal signal Sj through the network IN.

Consequently, the advertisement information desired to be reviewed can be reviewed through the consumer terminal J.

Upon the review, image information in the advertisement information which can be reviewed is output from the advertisement information server DB through the network IN. Then the image information inputs to the consumer terminal J as the terminal signal Sj from the network IN.

After the input interface processing preliminarily set up in the interface portion 21 is carried out, that image information is fetched into the CPU 20 as the advertisement signal Sav and output to the display 22 as a display signal Sdp, so that it is displayed as image information in the advertisement information desired at the consumer terminal J.

On the other hand, of the advertisement information which is allowed to be reviewed, voice information is output from the advertisement information server DB through the network IN with image information and input to the consumer terminal J as a terminal signal Sj from the network IN.

After the input interface processing preliminarily set up in the interface portion 21 is carried out, the voice information is fetched into the CPU 20 as a advertisement signal Sav. After that, it is output as a voice signal Sap to the voice output portion 24, so that it is output as voice information of the advertisement information desired at the consumer terminal J.

If the operating portion 23 is operated to vote for that advertisement information, when advertisement information in which a consumer is interested is found upon reviewing the advertisement information, an operation signal Sop corresponding to that voting is generated and output to the CPU 20.

Consequently, the CPU 20 generates the voting signal Svt containing the content of voting indicated by the operation signal Sop corresponding to the voting and outputs it to the interface portion 21.

Then, the interface portion 21 carries out the preliminarily set-up output interface processing upon the voting signal Svt and outputs it to the advertisement information server DB as the terminal signal Sj through the network IN.

If the terminal signal Sj reaches the advertisement information server DB, it is used for the above-described ranking creation processing as the voting signal Svt in the advertisement information server DB.

Next, the processing in the server and the like will be described below.

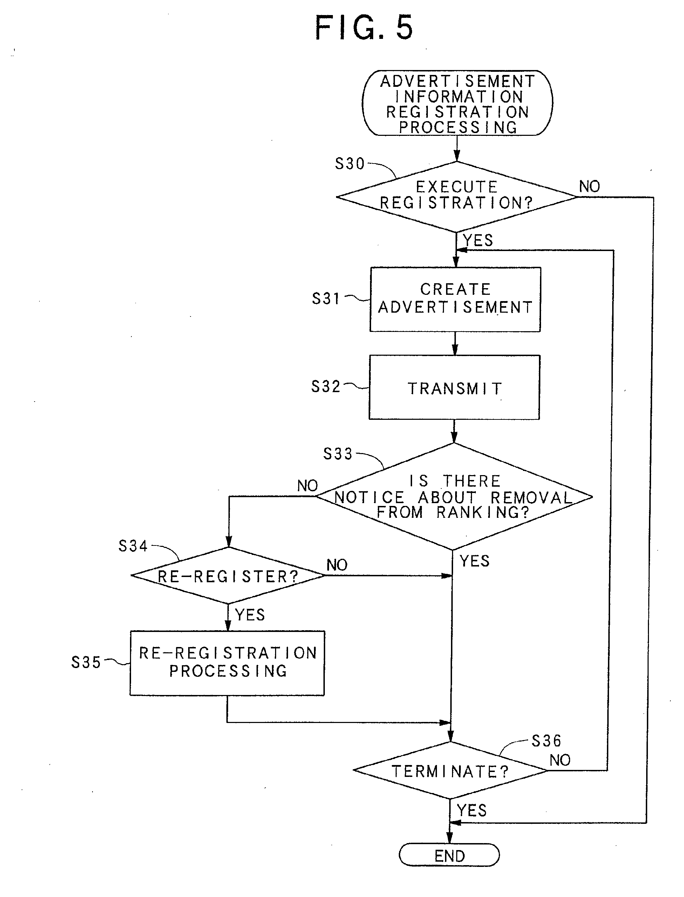

First, the advertisement information registration processing, which is to be carried out in the advertiser server AD, will be described with reference to a flow chart shown in FIG. 5 and FIG. 2.

In the advertisement information registration processing, as shown in FIG. 5, if a new product is developed, whether or not advertisement information about that product will be registered is recognized (in step S30). Unless that registration is carried out (in step S30: NO), the processing is terminated. On the other hand, if the registration is carried out (in step S30: YES), advertisement information which should be reviewed by a consumer is created in the advertisement information creating portion 1 (in step S31). Next, the created advertisement information is transmitted to the advertisement information server DB as an advertisement signal Sad through the CPU 2 and the interface portion 3 in order to register it (in step S32).

Upon registration of the advertisement information, payment processing for new matter registration fee to the advertisement information server DB is necessary. The new matter registration fee is a cost necessary for registering the advertisement information on the advertisement information server AD. Even if any advertisement information for which this payment is done is erased from the ranking memory 11 in which it is accumulated because of unpopularity or the like, it is kept accumulated in the advertisement information memory 12 in a predetermined period since the new matter registration (hereinafter referred to as a registration continuing period), so that it is kept such that it can be reviewed corresponding to a request from a consumer.

After that, the new matter registration processing on the advertisement information is executed in the advertisement information server DB and the advertisement information is accumulated in the advertisement information memory 12.

Next, whether or not the aforementioned ranking removal notice (that is, registration erase notice) based on a result of the voting by the consumer is transmitted is recognized (in step S33). Unless it is notified (in step S33: NO), the processing proceeds to step S36. If the ranking removal notice is transmitted (in step S33: YES), whether or not any advertisement information removed from the ranking is re-registered in the advertisement information server DB (that is, whether or not the re-registration is carried out) is recognized (in step S34).

Unless the re-registration is carried out (in step S34: NO), the processing proceeds to step S36. If the re-registration is carried out (in step S34: YES), a corresponding re-registration is carried out.

The re-registration processing includes, more specifically, reconsideration of the content of an advertisement information removed from the ranking, creation of new advertisement information, payment of a new matter registration fee (substantially the same amount as the aforementioned new matter registration fee) upon registration (referring to the step S32) of the created advertisement information in the advertisement information server DB.

Then, when the re-registration processing is finished, whether or not the entire registration processing for the advertisement information is terminated is recognized (in step S36). If it is intended to continue creating the advertisement information (in step S36: NO), the processing proceeds to the aforementioned step S31 in order to create a new advertisement information. On the other hand, if it is intended to terminate creating/registering the advertisement information (in step S36: YES), that processing is terminated as it is.

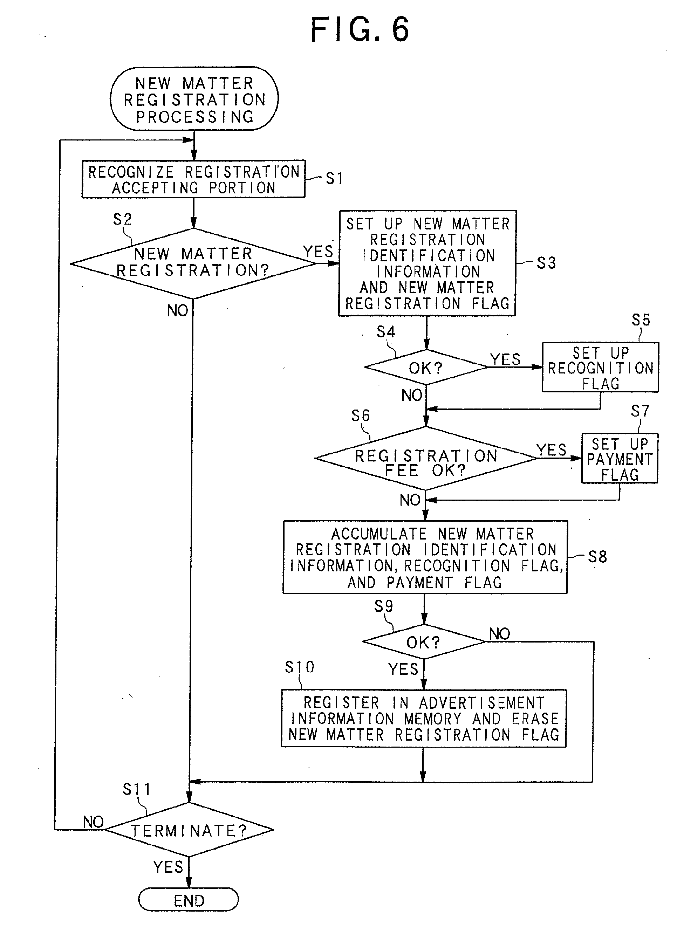

Next, each of the processes executed in the advertisement information server DB will be described with reference to flow charts shown in FIGs. 6 to 8 and FIG. 3.

First, the new matter registration processing which is executed in the advertisement information server DB by receiving the advertisement information registration processing carried out in the advertiser server AD will be described with reference to FIG. 6.

In the new matter registration processing, as shown in FIG. 6, first of all, a memory (not shown) in the registration accepting portion 18 is recognized (in step S1) and then, whether a new matter registration or a re-registration (hereinafter referred to as new matter registration) is executed by the advertiser server AD is recognized (in step S2).

If no new matter registration is executed by any advertiser server AD (in step S2: NO), the processing proceeds to step S11. On the other hand, if a new matter registration is executed by any advertiser server AD (in step S2: YES), new matter registration identification information indicating an advertiser, registration date and time and the like of advertisement information which is registered newly is set up and at the same time, a new matter registration flag indicating the new matter registration is set up (in step S3).

After that, whether or not setting of the new matter registration identification information and new matter registration flag is completed without any trouble 8 is recognized (in step S4). If it is completed (in step S4: YES), a recognition flag saying that is set up in that memory (in step S5), the processing proceeds to step S6. Unless the setting of the new matter registration identification information and new matter registration flag is completed for any reason (in step S4: NO), whether or not payment of the new matter registration (re-registration) fee is completed is recognized by the registration accepting portion 18 or the like (in step S6).

If payment of the registration fee is completed (in step S6: YES), a payment flag saying that is set up on a memory (not shown) (in step S7) and then, the processing proceeds to step S8.

On the other hand, if the payment of the registration fee is not yet completed in judgment of step S6 (in step S6: NO), the new matter registration identification information, recognition flag and payment flag are accumulated in the advertisement information flag 12 (in step S8).

Whether or not that accumulation is completed is recognized (in step S9) and if any one of the accumulations of each flag is not completed (in step S9: NO), it is regarded that any new matter registration has not been achieved properly. and the processing proceeds to step S11 in order to terminate the new matter registration. On the other hand, if the accumulations of all flags is completed (in step S9: YES), it is regarded that the new matter registration of each flag is completed without any trouble and then, advertisement information corresponding to any flag or the like (which should be registered newly) is accumulated and registered in the advertisement information memory 12. Any already set-up newly registered flag is erased from the memory (not shown) in the registration accepting portion 18 (in step S10).

Next, whether or not the new matter registration processing is completed is recognized (in step S11). When all the above described processes are completed without any trouble to finish the new matter registration processing (in step S11: YES), the processing is terminated as it is. On the other hand, if it is intended to repeat the new matter registration processing because "NO" occurs in the step S9 or for the other reason (in step S11: NO), the processing returns to step S1, in which the above-described series of the processes are executed.

After the new matter registration processing is completed, that advertisement information continues to be accumulated in the advertisement information memory 12 only in a registration continuing period made effective by payment of its new matter registration fee, so that it is kept by the information display portion 16 or the like such that it can be reviewed by a consumer.

As described above, even an advertisement information having popularity accumulated in the ranking memory 11 is erased from that ranking memory if its popularity drops due to a change in trend or the like, however, if it is erased in the above-described registration continuing period, it continues to be accumulated in the advertisement information memory 12. On the other hand, if the erase timing is after the registration continuing period elapses, it is erased from the advertisement information memory 12 also, so that it cannot be reviewed by any consumer. After that, a ranking removal notice, which will be described later, is transmitted to the advertiser server AD which has registered the advertisement information.

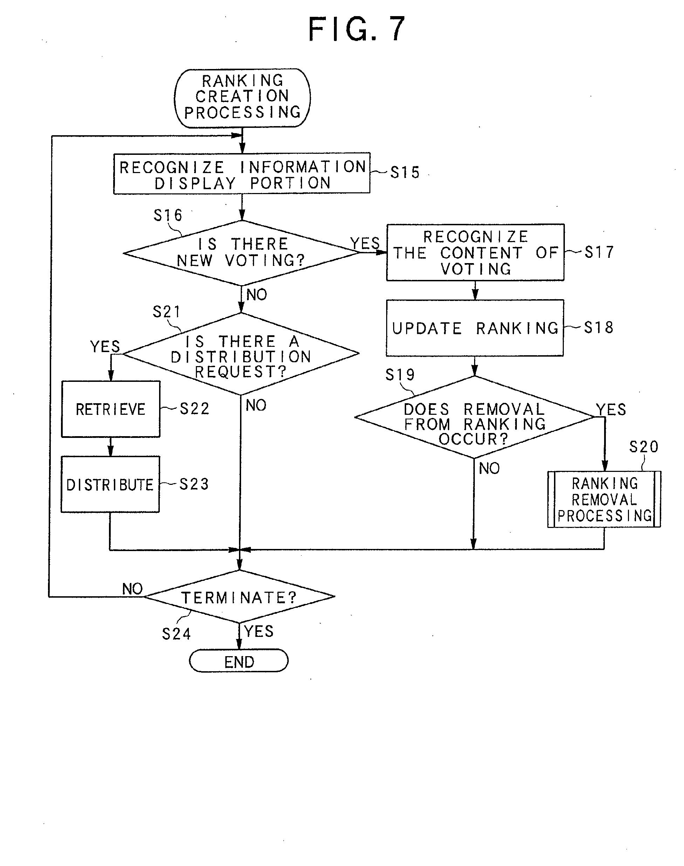

Next, the ranking creation processing which is executed in the advertisement information server DB by receiving a voting carried out at each consumer terminal J will be described with reference to FIG. 7.

The ranking creation processing shown in FIG. 7 may be executed every day or may be carried out once every week by gathering a result of the voting of that week.

In the ranking creation processing, as shown in FIG. 7, first, the content of the information display portion 16 indicating advertisement information which can be reviewed is recognized (in step S15) and whether or not a new voting is reached from any consumer terminal J is recognized (in step S16).

If no voting is reached (in step S16: NO), whether or not a review request. for any one of the advertisement information displayed in the information display portion 16 (that is, a distribution request through the network IN) is sent from any consumer terminal J is recognized (in step S21). If no review request is sent (in step S21: NO), the processing proceeds to step S24. On the other hand, if a review request for any advertisement information displayed is sent (in step S21: YES), the advertisement information (main body) requested to be reviewed is retrieved within the advertisement information memory 12 or the ranking memory 11 (in step S22). That retrieved advertisement information is distributed to the consumer terminal which requests that review through the network IN (in step S23) and the processing proceeds to step S24 for recognizing whether or not the ranking processing is terminated.

On the other hand, if a voting about any advertisement information is reached (in step S16: YES), its voting content is recognized (that is, identifying advertisement information which executes that voting) (in step S17) and a ranking up to just before the voting is updated by the ranking creation portion 15 based on that voting result (in step S18).

As a result, whether or not there is any advertisement information which is removed from the ranking accumulated in the ranking memory 11 is recognized (in step S19). If there is no advertisement information removed from the ranking (in step S19: NO), the processing proceeds to step S24. If there is any advertisement information removed from the ranking (in step S19: YES), the ranking removal processing for that advertisement information is executed (in step S20) and then, the processing proceeds to step S24.

Next, if there is no distribution request for the advertisement information (in step S21 NO), if distribution of the advertisement information is completed (in step S23), if the ranking removal processing is terminated (in step S20), or if there is no advertisement information removed from the ranking (in step S19: NO),whether or not the processing is terminated as it is, is recognized (in step S24). If the ranking creation processing is continued because other voting is reached or for the other reason (in step S24:NO), the processing is returned to step S15, in which the above-described series of the processes are repeated. On the other hand, if the ranking creation processing for all the voting is terminated (in step S24: YES), the processing is terminated as it is.

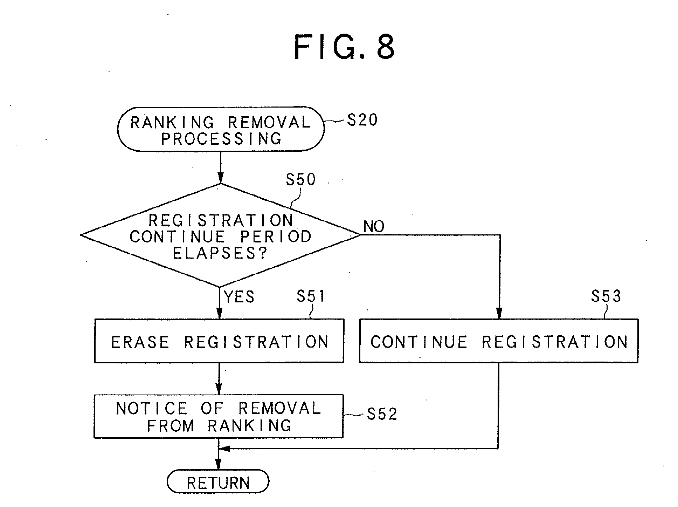

Next, a detail of the above-described ranking removal processing (in step S20) will be described with reference to Fig.8.

In the ranking removal processing of step S20, whether or not advertisement information removed from the ranking exceeds the aforementioned registration continuing period is recognized by the registration accepting portion 18 or the like (in step S50). Unless that period is exceeded (in step S50; NO), accumulation (that is, review possible condition) on the advertisement information memory 12 is continued (in step S53) to proceed to the step S24. On the other hand, if the registration continuing period is exceeded (in step S50; YES), accumulation (registration) in the advertisement information memory 12 and the ranking memory 11 is erased (in step S51) and then, the ranking removal notice is sent to the advertiser server AD in which that advertisement information was registered (in step S52) and the processing proceeds to the step S24.

By the above-described series of the ranking creation processing, pieces of advertisement information having ranking other than the ranking which should be accumulated in the ranking memory 11 as a result of the voting also continue to exist in the ranking memory 11 as advertisement information of high popularity without a fear that they are erased or generation of new cost such that they can be reviewed.

Finally, advertisement information display processing (voting processing) which is to be executed at each consumer terminal J will be described with reference to FIGs. 4 to 9 and FIG. 11.

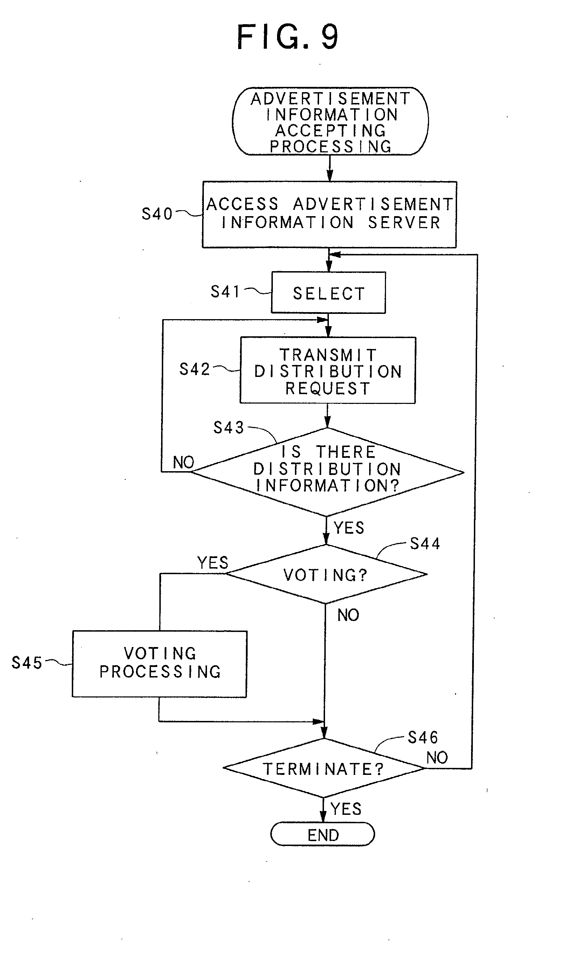

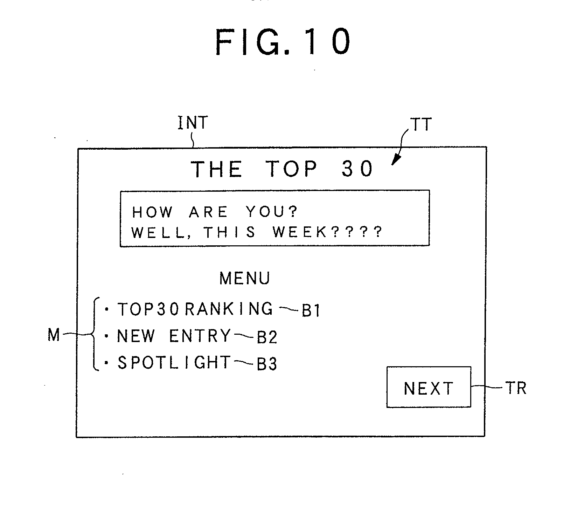

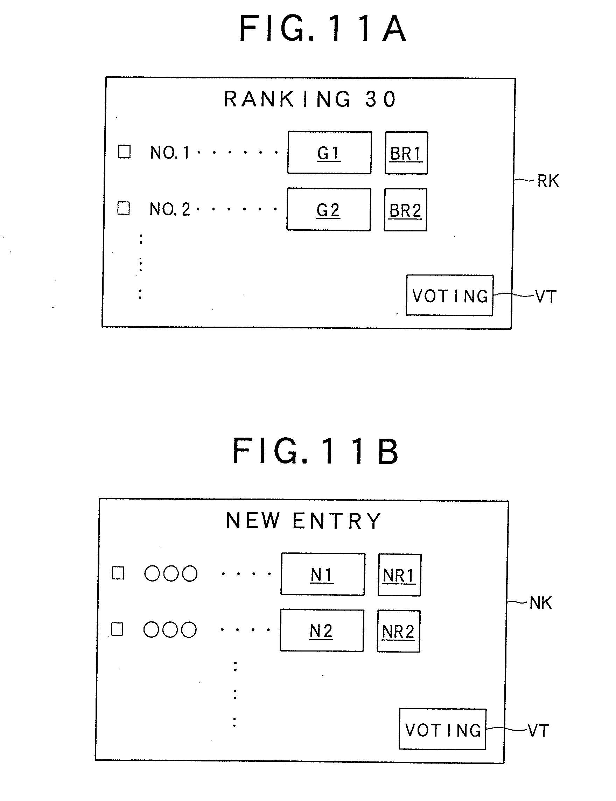

FIG. 9 is a flow chart showing the advertisement information display processing and FIGs. 10, 11 show examples of a screen indicated on the display 22 in the advertisement information display processing.

In the advertisement information display processing (voting processing) which is to be executed at each consumer terminal J, as shown in Fig.9, first, access to the advertisement information server DB through the network IN. (in step S40).

Just after this connection, for example, an initial connecting screen INT as shown in FIG. 10, for example, is displayed on the display 22 of each consumer terminal J by the advertisement information server DB through the network IN.

The initial connecting screen INT includes at least a menu indicating a title message TT and the content of information which can be reviewed and a move button TR which is operated when moving to a next screen as shown in FIG. 10. The menu M of FIG. 10 includes top 30 (in case where the condition for accumulating in the ranking memory 11 is within upper 30) display button B 1 for introducing pieces of the advertisement information having high popularity accumulated in the ranking memory 11 so that they can be reviewed, new matter registration display button B2 for introducing only newly registered advertisement information so that they can be reviewed and spotlight button B3 for introducing special matters (topics of the week and the like).

An advertisement information desired to be reviewed is selected through the initial connecting screen INT shown in FIG. 10.

As an example of the screen displayed on the display 22 for the selection, for example if the top 30 display button B1 is operated on the initial connecting screen INT, as shown in FIG. 11A, respective pieces of the advertisement information accumulated in the ranking memory 11 are displayed and introduced in order from the top of the ranking. More specifically, a selection screen RK is displayed containing at least representative screen (so-called thumbnail screen) representing the content of the advertisement information G1, G2, ···, review buttons BR1, BR2, ···· which are operated when reviewing each advertisement information obtained from the advertisement information server DB (ranking memory 11) and voting buttons VT which are operated after selecting the advertisement information to be voted when voting for an interested advertisement information.

If the new matter registration display button B2 is operated on the initial connecting screen INT, respective pieces of advertisement information accumulated newly in the advertisement information memory 12 are displayed and introduced such that they can be reviewed irrespective of the ranking. More specifically, for each advertisement information, a selection screen NK is displayed containing at least representative screens N1, N2, ··· representing the content of each advertisement information, review buttons NR1, NR2, ··· which are operated when obtaining each advertisement information from the advertisement information server DB (advertisement information memory 12) in order to review and voting buttons VT, which are operated after selecting that advertisement information to be voted when voting for an interested newly registered advertisement information.

The advertisement information is selected through the above described respective screens. After a distribution request for review is sent to the advertisement information server DB (in step S42), waiting condition occurs until distribution of advertisement information desired to be reviewed is reached (in step S43). When no advertisement information is distributed even if the waiting condition is continued in a predetermined time interval (in step S43: NO), the processing is returned to step S42 in order to make a distribution request again. On the other hand, if any advertisement information is distributed (in step S43: YES), whether or not the voting button VT is operated to vote for that distributed advertisement information is confirmed (in step S44). If it is operated (in step S44: YES), the voting processing on corresponding advertisement information with the voting signal Svt is executed (in step S45) and then, the processing proceeds to step S46.

On the other hand, if the voting is not carried out without operating the voting button VT (in step S44: NO), whether or not the advertisement information display processing is terminated is confirmed (in step S46). If the advertisement information display processing is continued further (in step S46; NO), the processing is returned to step S41, in which the above-described series of the processes are repeated. If the advertisement information display processing is terminated (in step S46; YES), the processing at the consumer terminal J is terminated.

According to the advertisement information providing system S of this embodiment, as described above, the advertisement information and distribution information including only related information necessary for distributing the advertisement information are distributed to a plurality of consumer terminals J through the network IN. Therefore, it is possible to provide a novel advertisement information providing system which allows nothing but advertisement information for use in advertisement to be distributed.

Further, because only advertisement information corresponding to a distribution request from each consumer terminal J is distributed, only advertisement desired by the consumer who receives output of the advertisement can be output, thereby preventing unnecessary advertisement from being output.

Further, because the information display portion 16 displays a plurality of advertisement information pieces such that they can be distributed, it is possible to provide such a novel advertisement information providing system which allows at least advertisement information for use in advertisement to be distributed.

Further, because advertisement information to be output is ranked and its result is distributed, the consumer can recognize the ranking of each advertisement information and grasp a trend of the generally liked advertisement information.

Further, because this system includes the advertisement information memory 12 for accumulating newly registered advertisement information and the ranking memory 11 for accumulating only pieces of advertisement information located at higher ranking, both the newly registered advertisement information and generally liked advertisement information can be output in parallel.

Further, because the newly registered advertisement information can be distributed to each consumer only in a registration continuing period irrespective of the ranking of each advertisement information, the general recognition period for the newly registered advertisement information can be secured, thereby enabling the ranking to be carried out more fairly.

Further, because only payment of the registration fee which an advertiser should pay in order to distribute advertisement information based on its ranking is accepted, that advertiser does not have to pay a conventional advertising cost continuously but instead can save his advertisement cost.

Further, because the re-registration fee which occurs after the removal from the ranking as well as a registration fee which is necessary when new advertisement information is registered is accepted, the advertisement information which is not removed from the ranking continues to be distributed without payment of the fee. Accordingly, an advertiser who creates advertisement information liked generally can continue to distribute that advertisement information at a low cost.

Although in the above-described embodiments, a case where the ranking is executed based on only a result of the voting by consumers has been explained, it is permissible to rank the advertisement information according to the number of distributions regardless of presence/absence of the voting or using the number of the distributions and the result of voting at the same time (in this case, weighing is carried out about which of the number of the distributions or the result of the voting should be considered more important in order to rank). In this case, it is possible to rank the advertisement information more fairly.

Further, if each advertisement information is composed of plural languages, the content of the advertisement information can be distributed more widely.

Further, if a catalog information memory which stores catalog information about commodity of an advertisement object in the advertisement information by receiving a fee from its advertiser is provided additionally and it is so constructed that the catalog information is distributed to each consumer when that catalog information is requested at each consumer terminal when the advertisement information is displayed, convenience of the advertisement information providing system S can be improved.

As further other embodiment, it is permissible to provide a consumer who votes more than a predetermined time with a special memory which he can access with a password issued to him with availability of a limited period as special treatment and then store high-quality and high resolution advertisement information such that it can be reviewed.

Further, as a favorable treatment to the advertiser, it is permissible to take a processing of reducing the new matter registration fee for an advertiser who acquires within higher tenth ranking when registering new other advertisement information next, give a commendation to creator of advertisement information accumulated continuously at high ranking in the ranking memory 11 or permit representative picture of the advertisement information ranked within top three to be constructed with animation picture.

Although the above-described embodiments mention a case where the advertisement information server DB distributes advertisement information and related information about consumer terminal identifying information necessary for distributing the advertisement information to each consumer terminal J through the server signal Ssb, it is permissible to construct that in addition to the advertisement information and the related information, information subsidiary to the advertisement information, more specifically, for example, coupon ticket which is an award for a person who answers properly to a ranking order finding quiz or a reward for a voting or catalog of commodity which is advertised in the advertisement information is distributed to the consumer terminal J. Consequently, such subsidiary services can be distributed efficiently at fewer distribution frequency to the consumer terminal J.

## Claims

1. An advertisement information providing system **characterized in** a distribution module (DB), including:
a registration accepting device (18) which accepts registration of advertisement information to be output as advertisement from outside;
a related information generating device (10) which generates advertisement related information necessary for distributing said advertisement information based on said registered advertisement information;
a distribution information generating device (10) which generates any one of distribution information composed of only said generated advertisement related information and said advertisement information corresponding to the generated advertisement related information or distribution information consisting of only said advertisement related information, said advertisement information corresponding to the advertisement related information and subsidiary information subsidiary to the advertisement information; and
an outputting device (13) which outputs said generated distribution information to a transmitting medium (IN), and
an output module (J) including:
said transmitting medium (IN) for distributing said output distribution information to a plurality of output modules (J);
an obtaining device (21) which obtains said output distribution information from said transmitting medium (IN); and
an information outputting device (22) which outputs said advertisement information included in said obtained distribution information.

2. The advertisement information providing system according to claim 1, wherein said output module (J) further includes a request generating device (20) which generates distribution request information indicating said advertisement information desired to be output and outputs to said distribution module (DB) through said transmitting medium (IN) and said outputting device (13) in said distribution module (DB) outputs said distribution information containing said advertisement information indicated by the distribution request information to said output module (J) which outputs the distribution request information through said transmitting medium (IN) based on said output distribution request information.

3. The advertisement information providing system according to claim 1 or claim 2, wherein said output module (J) further includes:
a voting accepting device (23) which accepts a voting for ranking said output advertisement information; and
a voting outputting device (21) which outputs voting information indicating the content of said accepted voting to said distribution module (DB) through said transmitting medium (IN), and
said distribution module (DB) further includes:
a ranking device (15) which ranks each said advertisement information based on said output voting information and generates ranking information; and
a ranking distribution device (13) which distributes said generated ranking information to each said output module (J).

4. The advertisement information providing system according to claim 3, wherein said ranking device (15) ranks each said advertisement information based on at least any one of said output voting information and the number of distributions to said output module (J) and generating said ranking information.

5. The advertisement information providing system according to claim 3 or claim 4, wherein said distribution module (DB) includes:
a new matter accumulating device (12) which accumulates all pieces of said advertisement information registered newly; and
a upper rank accumulating device (11) which accumulates only pieces of said advertisement information having higher rank than a predetermined rank, and
said distribution information generating device (10) in said distribution module (DB) generates said distribution information using said advertisement information accumulated in said upper rank accumulating device (11) and said new matter accumulating device (12).

6. The advertisement information providing system according to claim 5, wherein said output device (13) in said distribution module (DB) outputs said advertisement information registered newly only in a period preliminarily set up since the new matter registration irrespective of the rank order of said advertisement information indicated by said ranking information so that it can be distributed to said output module (J).

7. The advertisement information providing system according to claim 3 to claim 6, wherein said registration accepting device (18) in said distribution module (DB) includes a registration fee accepting device (18) which accepts only payment of registration fee which should be paid by an advertiser who distributes said advertisement information to each said output module (J) based on said ranking.

8. The advertisement information providing system according to claim 7, wherein said registration accepting device (18) in said distribution module (DB) accepts payment of re-registration fee which should be paid when said advertisement information removed from accumulation in said upper rank accumulating device (11) is re-registered as well as payment of registration fee which should be paid by an advertiser who distributes said advertisement information to each said output module (J) based on said ranking.

9. The advertisement information providing system according to claim 1 to claim 8, wherein said advertisement information is composed of plural languages.

10. The advertisement information providing system according to claim 1 to claim 9, wherein said distribution module (DB) includes:
a catalog accumulating device (10) which accumulates catalog information indicating an object of said advertisement information; and
a catalog information output device (13) which outputs said catalog information indicated by the catalog review request information based on catalog review request information transmitted from said output module (J) to said output module (J) which transmits said catalog review request information through said transmitting medium (IN), and said output module (J) includes:
a catalog review request information generating device (20) which generates said catalog review request information indicating said catalog information desired to be reviewed;
a catalog review request information output device (21) which outputs said generated catalog review request information to said distribution module (DB) through said transmitting medium (IN); and
an output module catalog information outputting device (22) which outputs catalog information output by said catalog information output device (13).

11. The distribution module (DB) contained in the advertisement information providing system described in claim 1 to claim 10, including at least:
said registration accepting device (18);
said related information generating device (10);
said distribution information generating device (10); and
said output device (13).

12. An information recording medium in which a distribution program which makes a distribution computer included in said distribution module (DB) in the advertisement information providing system containing the distribution module (DB) for outputting advertisement information output as advertisement to the transmitting medium (IN) and the output module (J) for acquiring the output advertisement information from said transmitting medium (IN) and outputting, function as:
a registration accepting device (18) which accepts registration of advertisement information from outside;
a related information generating device (10) which generates advertisement related information necessary for distributing said advertisement information based on said registered advertisement information;
a distribution information generating device (10) which generates any one of distribution information composed of only said generated advertisement related information and said advertisement information corresponding to the advertisement related information and distribution information consisting of only said advertisement related information, said advertisement information corresponding to the advertisement related information and subsidiary information subsidiary to the advertisement information; and
an outputting device (13) which outputs said generated distribution information to a transmitting medium (IN), is recorded readably by said distribution computer.

13. An information recording medium according to claim 12, in which said distribution program which makes said distribution computer functioning as said output device (13), function to output said distribution information containing said advertisement information indicated by the distribution request information based on the distribution request information indicating said advertisement information output from said output module (J) and desired to be output from the output module (J) to said output module (J) outputting the distribution request information through said transmitting medium (IN), is recorded readably by said distribution computer.

14. The information recording medium according to claim 12 or claim 13, in which said distribution program which makes said distribution computer function as:
a ranking device (15) which ranks each piece of said advertisement information based on voting information output from said output module (J) and indicating the content of voting for ranking each said advertisement information, and generates the ranking information; and
a ranking distribution device (13) which distributes said generated ranking information to each said output module (J).

15. The information recording medium according to claim 14, in which said distribution program which makes said distribution computer functioning as said ranking device (15), function to rank each piece of said advertisement information based on at least any one of said output voting information and the number of distributions to said output module (J) and generate said ranking information, is recorded readably by said distribution computer.

16. The information recording medium according to claim 14 or claim 15, wherein said distribution module (DB) includes:
a new matter accumulating device (12) which accumulates all pieces of said advertisement information registered newly; and
a upper rank accumulating device (11) which accumulates only pieces of said advertisement information having higher rank than a predetermined rank, based on said ranking information, and said distribution program which makes said distribution computer functioning as said distribution information generating device (10) to generate said distribution information using said advertisement information accumulated both in said upper rank accumulating device (11) and said new matter accumulating device (12).

17. The information recording medium according to claim 16, wherein said distribution program which makes said distribution computer functioning as said output device (13), function to output said advertisement information registered newly only in a period preliminarily set up since the new matter registration irrespective of the rank order of said advertisement information indicated by said ranking information so that it can be distributed to said output module (J), is recorded readably by said distribution computer.

18. The information recording medium according to claim 14 to claim 17, wherein said distribution program which makes said distribution computer functioning as said registration accepting device (18) function as a registration fee accepting device (18) which accepts only payment of registration fee which should be paid by an advertiser who distributes said advertisement information to each said output module (J) based on said ranking, is recorded readably by said distribution computer.

19. The information recording medium according to claim 18, wherein said distribution program which makes said distribution computer functioning as said registration accepting device (18) function to accept payment of re-registration fee which should be paid when said advertisement information removed from accumulation in said upper rank accumulating device (11) is re-registered as well as payment of registration fee which should be paid by an advertiser who distributes said advertisement information to each said output module (J) based on said ranking, is recorded readably by said distribution computer.

20. The information recording medium according to claim 12 to claim 19, wherein said distribution program in which said advertisement information is composed of plural languages, is recorded readably by said distribution computer.

21. The information recording medium according to claim 12 to claim 20, wherein said distribution module (DB) further includes a catalog accumulating device (10) which accumulates catalog information indicating an object of said advertisement information and said distribution program which makes said distribution computer function as a catalog information output device (13) which outputs said catalog information indicated by said catalog review request information based on the catalog review request information indicating said catalog information transmitted from said output module (J) and desired to be reviewed to said output module (J) which transmits said catalog review request information through said transmitting medium (IN), is recorded readably by said distribution computer.

22. A distribution program which makes a distribution computer included in said distribution module (DB) in the advertisement information providing system containing the distribution module (DB) for outputting advertisement information output as advertisement to the transmitting medium (IN) and the output module (J) for acquiring the output advertisement information from said transmitting medium (IN) and outputting, function as:
a registration accepting device (18) which accepts registration of advertisement information from outside;
a related information generating device (10) which generates advertisement related information necessary for distributing said advertisement information based on said registered advertisement information;
a distribution information generating device (10) which generates any one of distribution information composed of only said generated advertisement related information and said advertisement information corresponding to the advertisement related information and distribution information consisting of only said advertisement related information, said advertisement information corresponding to the advertisement related information and subsidiary information subsidiary to the advertisement information; and
an outputting device (13) which outputs said generated distribution information to a transmitting medium (IN).

23. An advertisement information providing method to be executed by said distribution module (DB) in the advertisement information providing system containing the distribution module (DB) for outputting advertisement information output as advertisement to the transmitting medium (IN) and the output module (J) for acquiring the output advertisement information from said transmitting medium (IN) and outputting, said advertisement information providing method **characterized in**:
a registration accepting process (S1 to S11) which accepts registration of advertisement information from outside;
a related information generating process which generates advertisement related information necessary for distributing said advertisement information based on said registered advertisement information;
a distribution information generating process which generates any one of distribution information composed of only said generated advertisement related information and said advertisement information corresponding to the advertisement related information and distribution information consisting of only said advertisement related information, said advertisement information corresponding to the advertisement related information and subsidiary information subsidiary to the advertisement information; and
an outputting process which outputs said generated distribution information to a transmitting medium (IN).

24. The advertisement information providing method according to claim 23, wherein said output process outputs said distribution information containing said advertisement information indicated by the distribution request information to said output module (J) outputting the distribution request information through said transmitting medium (IN) based on the distribution request information indicating said advertisement information output from said output module (J) and desired to be output from the output module (J).

25. The advertisement information providing method according to claim 23 or claim 24, further **characterized in**:
a ranking process (S15 to S22) which ranks each piece of said advertisement information based on voting information output from said output module (J) and indicating the content of voting for ranking each said advertisement information; and
a ranking distribution process (S23) which distributes said generated ranking information to each said output module (J).

26. The advertisement information providing method according to claim 25, wherein said ranking process (S15 to S22) ranks each piece of said advertisement information based on at least any one of said output voting information and the number of distributions to said output module (J) and generates said ranking information.

27. The advertisement information providing method according to claim 25 or claim 26, wherein said distribution module (DB) includes:
a new matter accumulating device (12) which accumulates all pieces of said advertisement information registered newly; and
a upper rank accumulating device (11) which accumulates only pieces of said advertisement information having higher rank than a predetermined rank, and said distribution information generating process generates said distribution information using said advertisement information accumulated both in said upper rank accumulating device (11) and said new matter accumulating device (12).

28. The advertisement information providing method according to claim 27, wherein said output process output said advertisement information registered newly only in a period preliminarily set up since the new matter registration irrespective of the rank order of said advertisement information indicated by said ranking information so that it can be distributed to said output module (J).

29. The advertisement information providing method according to claim 25 to claim 28, wherein said registration accepting process (S1 to S11) accepts only payment of registration fee which should be paid by an advertiser who distributes said advertisement information to each said output module (J) based on said ranking.

30. The advertisement information providing method according to claim 29, wherein said registration accepting process (S 1 to S11) accept payment of re-registration fee which should be paid when said advertisement information removed from accumulation in said upper rank accumulating device (11) is re-registered as well as payment of registration fee which should be paid by an advertiser who distributes said advertisement information to each said output module (J) based on said ranking.

31. The advertisement information providing method according to claim 23 to claim 30, wherein said advertisement information is composed of plural languages.

32. The advertisement information providing method according to claim 23 to claim 31, wherein said distribution module (DB) further includes a catalog accumulating device (10) which accumulates catalog information indicating an object of said advertisement information, said advertisement information providing method further **characterized in** a catalog information output process which outputs said catalog information indicated by said catalog review request information based on the catalog review request information indicating said catalog information transmitted from said output module (J) and desired to be reviewed to said output module (J) which transmits said catalog review request information through said transmitting medium (IN).

33. A distribution module (DB) for distributing advertisement information indicated at a consumer terminal (J) as advertisement to said consumer terminal (J) through a transmitting medium (IN), **characterized in**:
a registration accepting device (18) which accepts registration of advertisement information from outside;
a distribution information generating device (10) which generates distribution information to be distributed to said consumer terminal (J) based on said registered advertisement information;
a display device (16) which displays a plurality of said generated distribution information pieces such that they are capable of being reviewed from said consumer terminal (J) through said transmitting medium (IN) and distributed through said transmitting medium (IN); and
a distributing device (13) for based on a distribution request from said consumer terminal (J), distributing said distribution information corresponding to said distribution request to the consumer terminal (J) which outputs the distribution request through said transmitting medium (IN).

34. The distribution module (DB) according to claim 33, wherein said display device (16) displays at least a representative image of said distribution information to be displayed.

35. An information recording medium in which a distribution program which makes a distribution computer included in a distribution module (DB) for distributing advertisement information indicated at a consumer terminal (J) as advertisement to said consumer terminal (J) through a transmitting medium (IN), function as:
a registration accepting device (18) which accepts registration of advertisement information from outside;
a distribution information generating device (10) which generates distribution information to be distributed to said consumer terminal (J) based on said registered advertisement information;
a display device (16) which displays a plurality of said generated distribution information pieces such that they are capable of being reviewed from said consumer terminal (J) through said transmitting medium (IN) and distributed through said transmitting medium (IN); and
a distributing device (13) for based on a distribution request from said consumer terminal (J), distributing said distribution information corresponding to said distribution request to the consumer terminal (J) which outputs the distribution request through said transmitting medium (IN), is recorded readably by said distribution computer.

36. A distribution program which makes a distribution computer included in a distribution module (DB) for distributing advertisement information indicated at a consumer terminal (J) as advertisement to said consumer terminal (J) through a transmitting medium (IN) function as:
a registration accepting device (18) which accepts registration of advertisement information from outside;
a distribution information generating device (10) which generates distribution information to be distributed to said consumer terminal (J) based on said registered advertisement information;
a display device (16) which displays a plurality of said generated distribution information pieces such that they are capable of being reviewed from said consumer terminal (J) through said transmitting medium (IN) and distributed through said transmitting medium (IN); and
a distributing device (13) for based on a distribution request from said consumer terminal (J), distributing said distribution information corresponding to said distribution request to the consumer terminal (J) which outputs the distribution request through said transmitting medium (IN).
